# EUROPÄISCHE PATENTSCHRIFT

(11) **EP 0 364 716 B1**
(45) Veröffentlichungstag und Bekanntmachung des Hinweises auf die Patenterteilung: **31.03.1993**
(21) Anmeldenummer: 89116344.6
(22) Anmeldetag: 05.09.1989
(51) Int. Cl.: B23Q 3/155, B23Q 17/09, G05B 19/18, G05B 19/417

(54) **Numerisch gesteuerte Drehmaschine**
Digitally controlled lathe
Tour à commande numérique

(30) Priorität: 21.10.1988 DE 3835830
(43) Veröffentlichungstag der Anmeldung: 25.04.1990
(73) Patentinhaber: Hoesch Maschinenfabrik Deutschland Aktiengesellschaft, 44145 Dortmund (DE)
(72) Erfinder: Buchardt, Günter, D-5840 Schwerte (DE); Chwalisz, Hans-Werner, D-4600 Dortmund 1 (DE); Kruse, Werner, D-4600 Dortmund 16 (DE); Rabe, Karl-Friedrich, Dipl.-Ing., D-5810 Witten (DE); Reyer, Manfred, D-4600 Dortmund 30 (DE); Sauerwald, Walter, D-4600 Dortmund 30 (DE); Veuhoff, Rudolf, D-4355 Waltrop (DE)

(56) Entgegenhaltungen:
- DE-A- 1 903 564
- FR-A- 2 526 343
- FR-A- 2 599 654
- US-A- 4 752 885

## Beschreibung

Die Erfindung bezieht sich auf eine numerisch gesteuerte Drehmaschine mit einer Werkzeugmeßeinrichtung, einem in Längsvorschubrichtung verschiebbaren Drehsupport, der einen in Planvorschubrichtung verschiebbaren Planschlitten mit einer Werkzeugaufnahme enthält, mit einem Werkzeugmagazin, mehreren Werkzeugen, einer Werkzeugtransportvorrichtung und einem Meßtaster einer Meßvorrichtung, wobei der Meßtaster jedes Werkzeug an seiner Schneide vermißt.

Bei einer aus der DE-Z tz für Metallbearbeitung, 79. Jahrg. 1985, Heft 7/85, S. 29, 30, 32 bis 35, bekannten Drehmaschine der vorgenannten Art wird ein von der Werkzeugaufnahme des Planschlittens aufgenommenes Werkzeug an seiner Schneide vermessen mit einem Meßtaster, der an dem Spindelstock befestigt ist.

Eine derartige Drehmaschine hat den Nachteil, daß die Vermessung der Schneide eines Werkzeuges zwangsläufig zu einer Unterbrechung der Werkstückbearbeitung führt. Hiermit verbunden ist ein ungünstiger Nutzungsgrad der Drehmaschine, da die Meßzeit voll in die Bearbeitungszeit eingeht.

Der Erfindung liegt die Aufgabe zugrunde, eine Drehmaschine der eingangs genannten Art so auszubilden, daß eine Unterbrechung der Werkstückbearbeitung während der Vermessung der Schneide eines Werkzeuges vermieden wird.

Erfindungsgemäß wird diese Aufgabe dadurch gelöst, daß zur automatischen Werkzeugvermessung während der Werkstückbearbeitung das Werkzeugmagazin, die Werkzeugtransportvorrichtung, der Meßtaster und ein mit einer zusätzlichen Werkzeugaufnahme versehener Kreuzschlitten auf dem Planschlitten angeordnet sind, daß die Werkzeugtransportvorrichtung für den Transport eines jeden Werkzeugs zwischen dem Werkzeugmagazin und den beiden Werkzeugaufnahmen ausgelegt ist und daß die Meßvorrichtung den Meßtaster und den Kreuzschlitten enthält.

Zum Antrieb des Kreuzschlittens sind zwei Motoren vorgesehen.

Im folgenden wird die Erfindung anhand einer Zeichnung, in der ein Ausführungsbeispiel schematisch dargestellt ist, näher beschrieben.

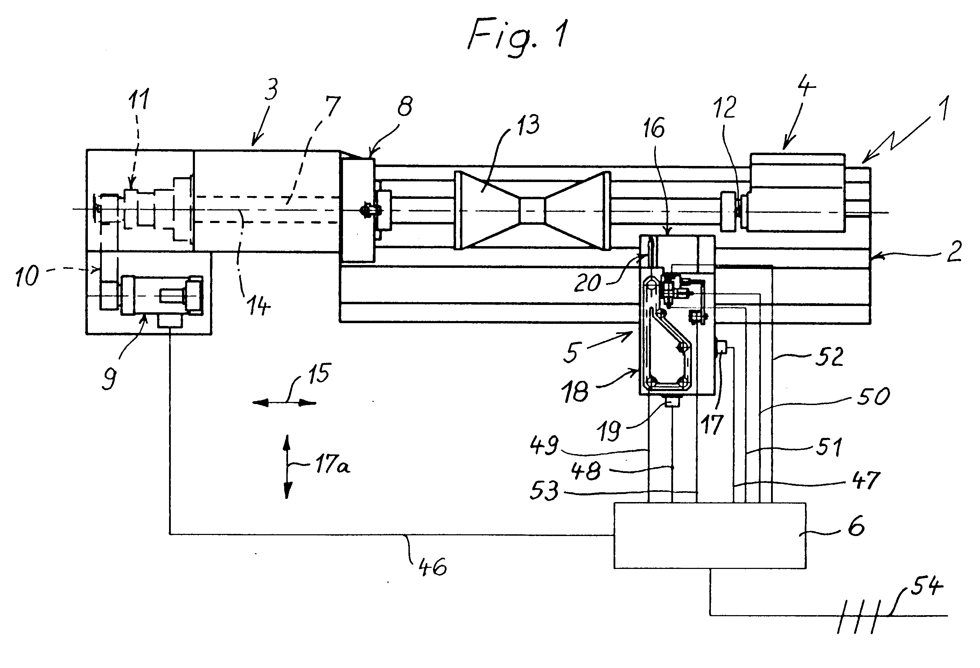

Es zeigt
- Fig. 1: eine numerisch gesteuerte Drehmaschine mit einem Maschinenbett, einem Spindelstock, einem Reitstock, einem Drehsupport und einem von dem Spindel- und dem Reitstock aufgenommenen Werkstück im Grundriß,

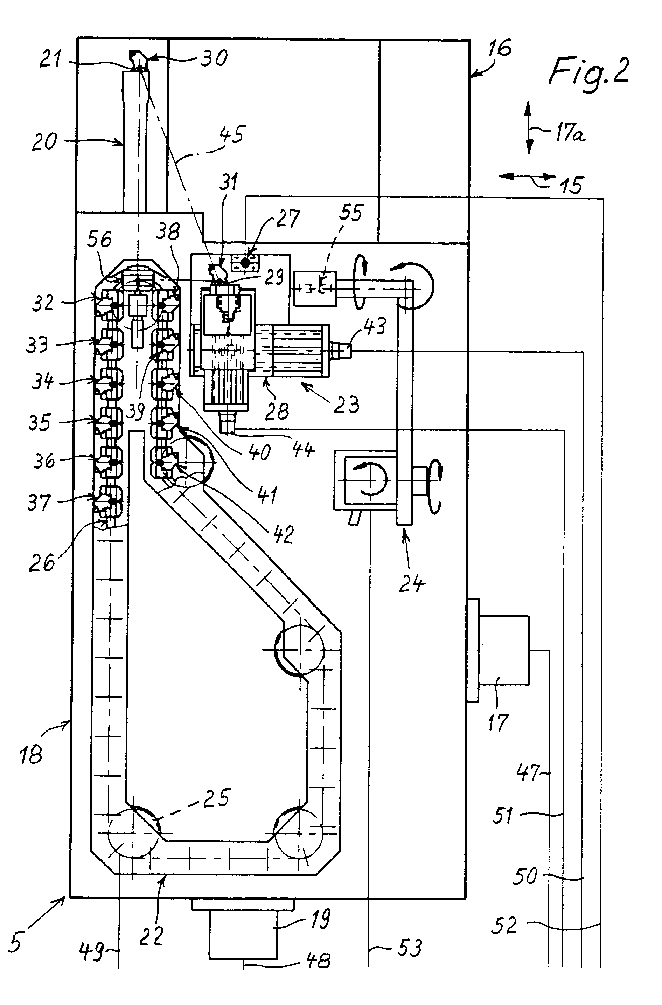

- Fig. 2: den Drehsupport mit einem Werkzeugmagazin, mehreren Werkzeugen, einer Meßvorrichtung und einer Werkzeugtransportvorrichtung im Grundriß in vergrößertem Maßstab,

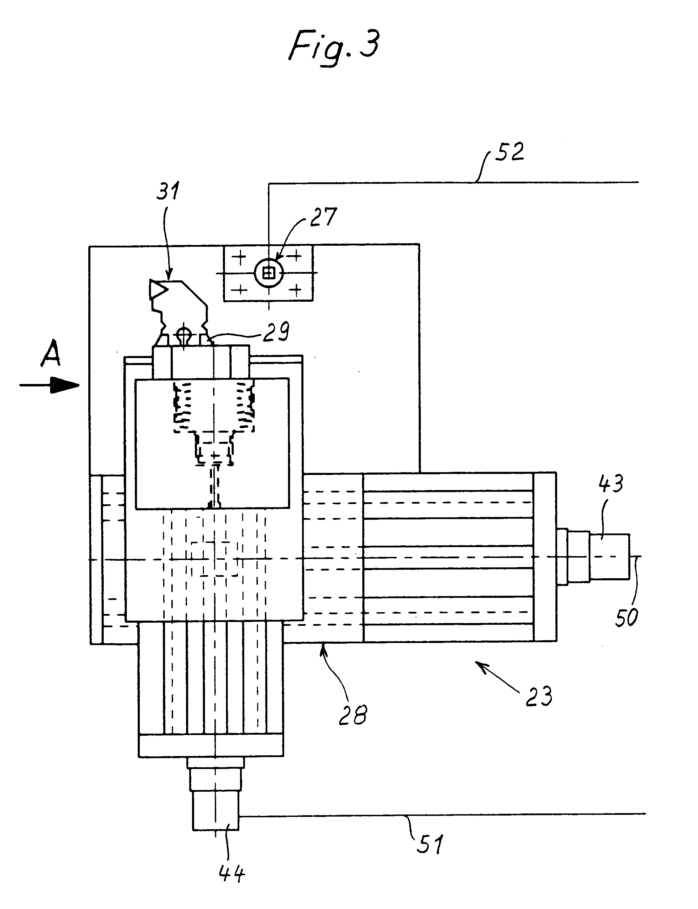

- Fig. 3: die Meßvorrichtung im Grundriß in einem anderen vergrößerten Maßstab,

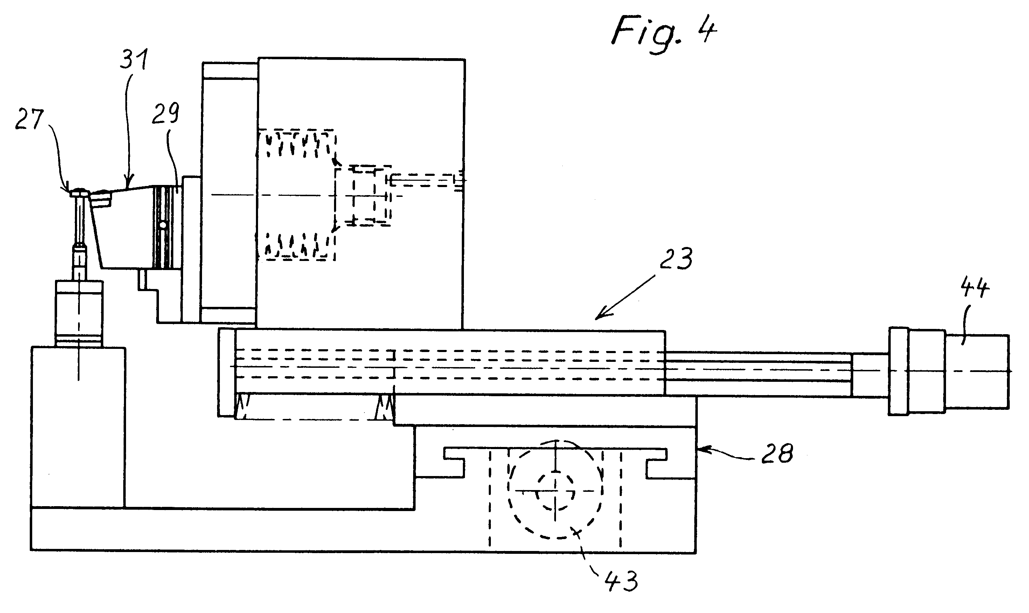

- Fig. 4: eine Ansicht der Meßvorrichtung in Richtung des Pfeiles A in Fig. 3 in vergrößertem Maßstab.

Eine numerisch gesteuerte Drehmaschine 1 setzt sich zusammen aus einem Maschinenbett 2, einem Spindelstock 3, einem Reitstock 4, einem Drehsupport 5 sowie einer Schalt- und Steuereinheit 6.

Der Spindelstock 3 besitzt eine Hauptspindel 7 mit einer Planscheibe 9.

Die Drehbewegung der Planscheibe 8 erzeugt ein Motor 9, der über ein Riemen- (10) und ein Planetengetriebe 11 die Hauptspindel 7 antreibt.

Auf der Drehmaschine 1 befindet sich ein von der Planscheibe 8 und einer Körnerspitze 12 des Reitstockes 4 aufgenommenes Werkstück 13.

Die Drehachse der Drehmaschine 1 ist mit 14 bezeichnet.

Der Drehsupport 5 weist einen auf dem Maschinenbett 2 in Längsvorschubrichtung (Doppelpfeil 15) verschiebbaren Bettschlitten 16 auf.

Die Längsvorschubbewegung des Bettschlittens 16 erzeugt ein Motor 17.

Der Bettschlitten 16 trägt einen in Planvorschubrichtung (Doppelpfeil 17ₐ) verschiebbaren Planschlitten 18.

Die Planvorschubbewegung des Planschlittens 18 erzeugt ein Motor 19.

Zu dem Planschlitten 18 gehört ein Werkzeugträger 20 mit einer Werkzeugaufnahme 21.

Auf dem Planschlitten 18 sind ein Werkzeugmagazin 22, eine Meßvorrichtung 23 und eine Werkzeugtransportvorrichtung 24 angeordnet.

Das Werkzeugmagazin 22 ist ausgeführt mit einer von einem Motor 25 angetriebenen Umlaufkette 26.

Die Meßvorrichtung 23 enthält einen Meßtaster 27 und einen Kreuzschlitten 28.

Der Kreuzschlitten 20 hat eine Werkzeugaufnahme 29, die wie die Werkzeugaufnahme 21 des Werkzeugträgers 20 ausgebildet ist.

Die Meßvorrichtung 23 dient der Vermessung eines jeden Werkzeuges 30, 31, 32, 33, 34, 35, 36, 37, 38, 39, 40, 41, 42 an seiner Schneide.

Angetrieben wird der Kreuzschlitten 28 von zwei Motoren 43, 44.

Die Werkzeugtransportvorrichtung 24 ist ausgelegt für den Transport eines jeden Werkzeuges 30 bis 42 in einem Dreiecksbereich 45, der von dem Werkzeugmagazin 22 und den Werkzeugaufnahmen 21, 29 gebildet wird.

Die Motoren 9, 17, 19, 25, 43, 44, der Meßtaster 27 und die Werkzeugtransportvorrichtung 24 sind über je eine Leitung 46, 47, 48, 49, 50, 51, 52, 53 an die von einem Stromnetz 54 gespeiste Schalt- und Steuereinheit 6 angeschlossen.

Die Drehmaschine 1 erlaubt während einer Teilbearbeitung des Werkstückes 13 mit dem Werkzeug 30 eine Vermessung der Schneide des Werkzeuges 31 und eine Meßwertverarbeitung in der numerischen Steuerung.

Sobald diese Teilbearbeitung abgeschlossen ist, transportiert ein Greifer 55 der Werkzeugtransportvorrichtung 24 nacheinander das Werkzeug 30 aus der Werkzeugaufnahme 21 des Werkzeugträgers 20 zu einem leeren Tragglied 56 der Umlaufkette 26 und das vermessene Werkzeug 31 von der Werkzeugaufnahme 29 des Kreuzschlittens 28 zu der Werkzeugaufnahme 21 des Werkzeugträgers 20. Danach wird eine weitere Teilbearbeitung des Werkstückes 13 mit dem Werkzeug 31 durchgeführt.

## Patentansprüche

1. Numerisch gesteuerte Drehmaschine mit einer Werkzeugmeßeinrichtung, einem in Längsvorschubrichtung (15) verschiebbaren Drehsupport (5), der einen in Planvorschubrichtung (17a) verschiebbaren Planschlitten (18) mit einer Werkzeugaufnahme (21) enthält, mit einem Werkzeugmagazin (22), mehreren Werkzeugen (30 bis 42), einer Werkzeugtransportvorrichtung (24) und einem Meßtaster (27) einer Meßvorrichtung (23), wobei der Meßtaster (27) jedes Werkzeug (30 bis 42) an seiner Schneide vermißt, dadurch gekennzeichnet, daß zur automatischen Werkzeugvermessung während der Werkstückbearbeitung das Werkzeugmagazin (22), die Werkzeugtransportvorrichtung (24), der Meßtaster (27) und ein mit einer zusätzlichen Werkzeugaufnahme (29) versehener Kreuzschlitten (28) auf dem Planschlitten (18) angeordnet sind, daß die Werkzeugtransportvorrichtung (24) für den Transport eines jeden Werkzeugs (30 bis 42) zwischen dem Werkzeugmagazin (22) und den beiden Werkzeugaufnahmen (21, 29) ausgelegt ist und daß die Meßvorrichtung (23) den Meßtaster (27) und den Kreuzschlitten (28) enthält.

2. Numerisch gesteuerte Drehmaschine nach Anspruch 1, dadurch gekennzeichnet, daß zum Antrieb des Kreuzschlittens (28) zwei Motoren (43, 44) vorgesehen sind.

## Claims

1. Numerically controlled lathe having a tool measuring device, a lathe support rest (5) which is displaceable in the longitudinal feed direction (15) and which comprises a cross-slide rest (18) which is displaceable in the transverse feed direction (17a) and which has a tool receiving device (21), and a tool storage device (22), a plurality of tools (30 to 42), a tool transportation device (24) and a measuring calliper (27) of a measuring device (23), wherein the measuring calliper (27) measures each tool (30 to 42) on its cutter, characterised in that in order to automate the taking of the measurement of the tool during the finishing work on the workpiece, the tool storage device (22), the tool transportation device (24), the measuring calliper (27) and a cross slide (28) provided with an additional tool receiving device (29) are arranged on the cross-slide rest (18), further that the tool transportation device (24) is designed for transporting one of the tools (30 to 42) between the tool storage device (22) and the two tool receiving devices (21, 29) and further the measuring device (23) comprises the measuring calliper (27) and the cross slide (28).

2. A numerically controlled lathe according to claim 1, characterised in that two motors (43,44) are provided for the purpose of driving the cross slide (28).

## Revendications

1. Tour à commande numérique, pourvu d'un dispositif de mesure des outils, d'un support rotatif (5) mobile dans la direction d'avance longitudinale (15), qui comprend un chariot transversal (18) mobile dans la direction d'avance transversale (17a), pourvu d'un logement (21) pour l'outil, un magasin à outils (22), plusieurs outils (30 à 42), un dispositif (24) de transport des outils et un palpeur de mesure (27) d'un dispositif de mesure (23), le palpeur de mesure (27) mesurant chaque outil (30 à 42) à l'endroit de son tranchant, caractérisé en ce que, pour la mesure automatique des outils pendant l'usinage, le magasin à outils (22), le dispositif (24) de transport des outils, le palpeur de mesure (27) et un chariot à croix (28) pourvu d'un logement supplémentaire (29) pour outil sont prévus sur le chariot transversal (18), en ce que le dispositif (24) de transport des outils est agencé pour transporter chaque outil (30 à 42) entre le magasin à outils (22) et les deux logements (21, 29) pour outils, et en ce que le dispositif de mesure (23) comprend le palpeur de mesure (27) et le chariot à croix (28).

2. Tour à commande numérique selon la revendication 1, caractérisé en ce que deux moteurs (43, 44) sont prévus pour la commande du chariot à croix (28).
